(19) **Europäisches Patentamt**

**European Patent Office**

**Office européen des brevets**

(11) **EP 0 568 982 B2**

(12) **NEUE EUROPÄISCHE PATENTSCHRIFT**

(45) Veröffentlichungstag und Bekanntmachung des Hinweises auf die Entscheidung über den Einspruch:
**14.01.2004 Patentblatt 2004/03**

(45) Hinweis auf die Patenterteilung:
**07.06.2000 Patentblatt 2000/23**

(51) Int Cl.$^7$: **H04N 9/28**, H04N 3/233

(21) Anmeldenummer: **93107232.6**

(22) Anmeldetag: **04.05.1993**

(54) **Verfahren und Vorrichtung zur digitalen Bildkorrektur**

Digital image correction method and device

Méthode et dispositif de correction d'image numérique

(84) Benannte Vertragsstaaten:
**DE ES FR GB IT**

(30) Priorität: **04.05.1992 DE 4214317**

(43) Veröffentlichungstag der Anmeldung:
**10.11.1993 Patentblatt 1993/45**

(73) Patentinhaber: **DEUTSCHE THOMSON-BRANDT GMBH**
**78048 Villingen-Schwenningen (DE)**

(72) Erfinder: **Gleim, Günter**
**W-7730 VS-Villingen (DE)**

(56) Entgegenhaltungen:
**WO-A-91/06176**

• **Datenblatt "Ablenkprozessor SDA 9064" der Firma Siemens, Ausgabe 9.87**
• **Tagungsvorlage "Digitalchassis DIV A3B", Dokumentation der Siemens AG, BV AT UE S2, vom 23.02.1988, präsentiert und übergeben Herrn Ing. Heinz Kraus 1988 anlässlich einer Präsentation des Systems bei Siemens. "ICs for Entertainment Electronics", Edition 8.87, Seiten 3-10, sowie die Figuren 1-4**
• **Fernsehgeräte der Firma Metz mit den Chassis 689 G-..., Mallorca 84-100 VT 7994, Tahiti 70-100 VT 7999 und zugehörige Broschüre "Technik und Service", Seiten 35-40 und Tafel 2**
• **Valvo Druckschrift "Die Videokombination TDA 4580, TI 850719", Seiten 14/15**

EP 0 568 982 B2

**Beschreibung**

Die vorliegende Erfindung betrifft ein Verfahren gemäß Anspruch 1 und eine zur Durchführung des erfindungsgemäßen Verfahrens geeignete Vorrichtung gemäß dem ersten Sachanspruchs.

Regelsysteme, die aufgrund von gemessenen Ist-Werten und vorgegebenen Sollwerten Stellgrößen bestimmen, sind allgemein bekannt Derartige Regelsysteme finden auch in dem digitalen Ablenkprozessor SDA 9064 von Siemens Anwendung. Bei diesem Prozessor sind Daten zur Modulation der Ost/West Rasterkorrektur und der Vertikalablenkung in einem nichtflüchtigen Speicher abgespeichert. Bei Inbetriebnahme werden die Daten aus dem nichtflüchtigen Speicher in einem flüchtigen Zwischenspeicher kopiert. Der Ablenkprozessor SDA 9064 ist auch mit einer Regelschleife zur Konstanthaltung von Form und Amplitude des Vertikalablenkstromes versehen. Es sind auch spezielle Anwendungen von Regelsystemen, beispielsweise für eine sogenannte Konvergenzkorrektur bekannt.

So wird beispielsweise in der DE-OS 39 36 789 ein Projektions-Fernsehgerät vorgestellt, bei dem ein in Serie mit Ablenkspulen geschalteter Widerstand vorgesehen ist, an dem eine Spannung Ua abfällt, deren Wert abhängig ist von einem Ablenkstrom ia. Die Spannung Ua wird mit einem vorgegebenen Wert verglichen und in Abhängigkeit von diesem Vergleich werden Stellgrößen bestimmt, die den Ablenkstrom ia beeinflussen.

Weiterhin ist die DE-OS 39 34 421 bekannt, in der eine Schaltung zur Rasterkorrektur in einem Fernsehgerät vorgestellt wird. Diese Schaltung bewirkt, daß eine Spannung, die abgreifbar ist an einem mit einer Ablenkspule in Reihe geschalteten Widerstand, mit einer Referenzspannung verglichen wird und daraufhin Ansteuersignale für die Ablenkspule gegebenenfalls korrigiert werden. Dabei wird unterschieden zwischen einer dynamischen Korrektur für eine Vielzahl von Punkten auf einem Fernsehbild und einer statischen Korrektur, um eine Offsetlage zu stabilisieren.

Die aus dem Stand der Technik bekannten Systeme zur Konvergenzkorrektur erlauben jedoch nicht sowohl eine Korrektur von optischen als auch von elektrischen Abweichungen mit nur einer Regelschleife.

Aus der EP 0 280 302 ist ein System zur automatischen Konvergenzkorrektur für ein Farbfernsehgerät bekannt. Bei diesem System wird die tatsächliche Istposition eines bestimmten Markierungsmusters in Bezug auf eine Referenzposition durch photoempfindliche Elemente festgestellt. Abweichungen der tatsächlichen Position von der Referenzposition werden mittels einer Regelung korrigiert. Bei diesem System werden vorbestimmte Bildkorrekturen stets gemeinsam mit elektrischen Störgrößen, z. B. Offsetspannungen, verarbeitet.

Es ist die Aufgabe der vorliegenden Erfindung, eine Regelung zu verwirklichen, die bei gringem schaltungstechnischem Aufwand eine Korrektur verschiedener Störgrößen ermöglicht und einen geringen Speicherbedarf aufweist.

Diese Aufgabe wird gelöst durch ein Verfahren nach Anspruch 1 und durch eine zur Durchführung des erfindungsgemäßen Verfahrens geeigneten Vorrichtung nach dem ersten Sachanspruch.

Vorteilhafte Weiterbildungen sind durch die Unteransprüche gekennzeichnet.

Erfindungsgemäß wird zunächst ein Istwert, der ein Maß ist für die Wirkung eines Stellmittels (Stellgliedes), erfaßt und daraufhin durch Vergleich mit einem vorgegebenem Soll-Wert in einer Regel Phase ein Regel-Stellsignal bestimmt.

Zusätzlich werden zuvor bestimmte Korrektursignale, die zur Korrektur von nicht durch den Regelprozeß erfaßten Störungen dienen, dem Regel-Stellsignal überlagert. Diese Korrektursignale können bei Anwendung der erfindungsgemäßen Regelung bei einer Konvergenzkorrektur beispielsweise die Einflüsse von mechanischen Fehljustierungen oder optischen Abweichungen bei einzelnen Bildröhren erfassen. Weiterhin können Bildverzerrungen, wie beispielsweise Kissenverzerrungen, durch die zuvor bestimmten Korrektursignale korrigiert werden. Um nicht für jeden einzelnen Bildpunkt Korrekturwerte abspeichern zu müssen, können auch Interpolationsverfahren verwendet werden.

Wie derartige Korrektursignale ermittelt werden, ist bekannt und es soll an dieser Stelle nicht weiter darauf eingeganger werden.

Durch die überlagerung der Korrektursignale mit dem Regel-Stellsignal wird ein sogenanntes Stellsignal erzeugt, welches in einem Betriebsmodus zur Ansteuerung der Stellmittel verwendet wird.

Obwohl die Erfindung im wesentlichen anhand der Konvergenzkorrektur beschrieben wird, sei darauf hingewiesen, daß sie nicht darauf beschränkt ist. So ist es beispielsweise möglich, Signale, die von einem CD-Spieler erzeugt werden oder Signale, die zur Steuerung einer Empfangsstufe, wie beispielsweise eines Hochfrequenz-Tuners, dienen, gemäß der vorliegenden Erfindung zu korrigieren.

Eine erste Art von Korrekturwerten dient in diesem Fall beispielsweise für die Korrektur von im wesentlichen konstanten Offsetgrößen elektrischer Bauelemente und eine zweite Gruppe von Korrekturwerten wird für die Korrektur von Größen genommen, die sich im Betrieb der Empfangsstufe ändern können. Zu dieser zweiten Gruppe von Korrekturwerten können beispielsweise solche gehören, die durch thermische Effekte verursacht werden. Diese werden bevorzugterweise zu vorgegebenen Zeiten in einem Korrekturmodus korrigiert, zu denen eine Beeinflussung eines Benutzers oder nachgeschalteter Mittel gering ist.

Um trotz feiner Auflösung den Regelbereich so klein wie möglich zu halten, werden bei einer Ausgestaltung der Erfindung dem Regel-Stellsignal weitere Signale überlagert. Diese zusätzlichen Signale haben einen Wert, der gebildet wird in Abhängigkeit von dem Gesamtbereich der Korrektursignale und des Regel-Stellsignals.

Ist es möglich, die zuvor bestimmten Korrektursignale zu unterteilen in eine erste Gruppe, welche statische Fehler korrigiert, wie beispielsweise mechanische oder optische Fehljustierungen einer Bildröhre, und in eine zweite Gruppe, welche dynamische Fehler korrigiert, wie beispielsweise die genannte Kissenverzerrung, so können in den Fällen in denen das Regel-Stellsignal gemeinsame Korrekturen für alle Bildpunkte korrigiert, dieses zunächst den für die statischen Korrekturen bestimmten Korrektursignale überlagert werden. Das daraus erzeugte Signal (im weiteren auch statisches Stellsignal genannt) wird anschließend der dynamischen Stellgröße überlagert, wodurch das Stellsignal gewonnen wird.

Dem liegt die Erkenntnis zugrunde, daß eine Regel-Vorrichtung, insbesondere zur Konvergenzkorrektur, einen (Standard-) Mikroprozessor enthält, der das Regel-Stellsignal erzeugt, und einen zweiten (spezifischen) Baustein, der beispielsweise Korrekturwerte zwischenspeichert, die Umschaltung zwischen Regelmodus und Betriebsmodus bewirkt, die Stellsignale zur Ansteuerung des Stellmittels aufbereitet, usw.. Diese beiden Bausteine sind üblicherweise mit einer Datenleitung mit begrenzter Kapazität verbunden, die beispielsweise als serielle Datenleitung gestaltet sein kann.

Werden die statischen Korrektursignale innerhalb des Mikroprozessors mit dem Regel-Stellsignal überlagert, so wird zum einen das statische Stellsignal, das nur eine relativ geringe Anzahl an Korrekturdaten umfaßt, über eine Datenleitung an den zweiten Baustein geleitet. Über diese Datenleitung kann auch die dynamische Stellgröße, die eine recht große Anzahl von Korrekturdaten umfaßt, jedoch konstante Werte aufweist, an den zweiten Baustein gesandt werden. Damit wird insgesamt ein geringerer Datenfluß zwischen den beiden Bausteinen erforderlich, wenn das Regel-Stellsignal bereits innerhalb des Mikroprozessors der statischen Stellgröße überlagert wird.

Dienen zur Ansteuerung des Stellmittels zwei oder mehr Ansteuerketten, die jeweils beispielsweise Digital/Analog-Konverter, Verstärker, usw. umfassen, so ist bei jeder dieser Ketten mit einer individuellen Drift, beispielsweise aufgrund von Temperaturänderungen oder Alterung, zu rechnen und für jede dieser Ketten ist die Bestimmung von Regel-Stellsignalen und damit auch von Stellsignalen erforderlich.

Um eine Verminderung des erforderlichen Speicherbedarfs und der erforderlichen Datenleitungs-Kapazität zu erzielen, kann eine Aufteilung bei der Übertragung der Stellsignale für die einzelnen Ansteuerketten erfolgen.

Zum einen kann ein Mittelwert der beiden Einzel-Regelstellsignale im Mikroprozessor gebildet und an den zweiten Baustein weitergeleitet werden. Dieser einzige Mittelwert, der sich ähnlich ändert wie der Wert eines einzelnen Regel-Stellsignals, kann dem statischen Stellsignal überlagert werden.

Zum anderen werden die Differenzen der Einzel-Regel-Stellsignale zu dem Mittelwert gebildet und diese Differenzen werden zu den dynamischen Korrektursignalen addiert und übertragen.

Weitere Merkmale, Vorteile und Einzelheiten der Erfindung werden in den folgenden Ausführungsbeispielen anhand der Zeichnung erläutert. Dabei zeigen:

Fig. 1 :      Eine Schaltung zur Konvergenzkorrektur

Fig. 2, 3 :      Verschiedene Ausführungsbeispiele zur Konver genzkorrektur mit einer Ansteuerkette;

Fig. 4 :      ein weiteres Ausführungsbeispiel zur Konvergenzkorrektur mit zwei Ansteuerketten;

Fig. 5 :      eine Schaltung, bei der Größen zur Ansteuerung eines Tuners korrigiert werden.

Bevor auf die Beschreibung der Ausführungsbeispiele näher eingegangen wird, sei darauf hingewiesen, daß die in den Figuren einzeln dargestellen Blöcke lediglich zum besseren Verständnis der Erfindung dienen. Üblicherweise sind einzelne oder mehrere dieser Blöcke zu Einheiten zusammengefaßt. Diese können in integrierter oder Hybridtechnik oder als programmgesteuerter Mikrorechner, bzw. als Teil eines zu seiner Steuerung geeigenten Programmes realisiert sein.

Die in den einzelnen Stufen enthaltenen Elemente können jedoch auch getrennt ausgeführt werden.

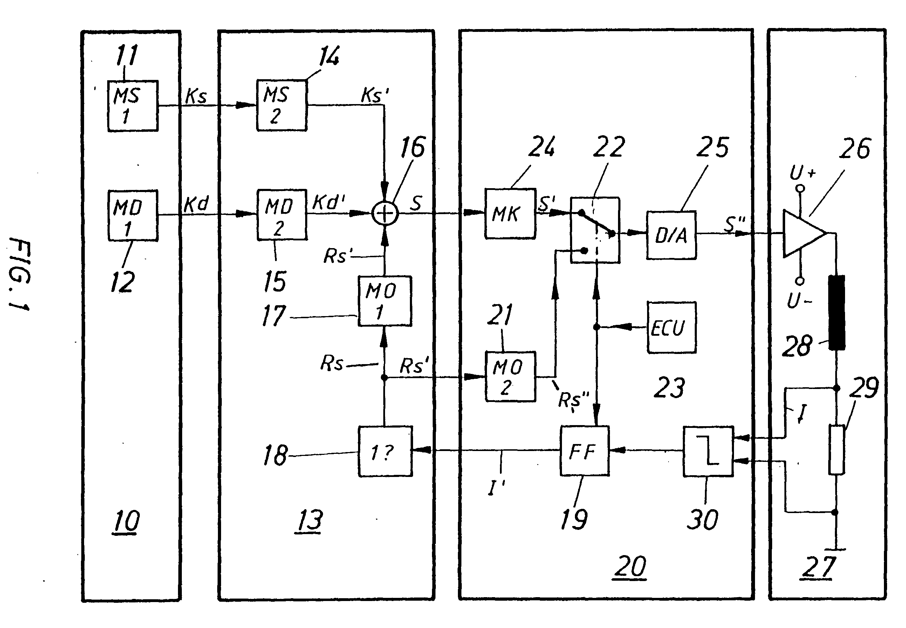

In Figur 1 sind mehrere Blöcke dargestellt, wovon ein erster Block 10 einen Speicherbaustein darstellt, der einen ersten Statikspeicher (MS 1) 11 und einen ersten Dynamikspeicher (MD 1) 12 aufweist, die beispielsweise als sogenannter EEPROM ausgestaltet sein können. Ein weiterer Block 13 soll einen Mikroprozessorbaustein symbolisieren. Dieser enthält einen zweiten Statikspeicher (MS 2) 14 und einen zweiten Dynamikspeicher (MD 2) 15, die jeweils eingangsseitig mit den entsprechenden ersten Speichern 11 bzw. 12 verbunden sind und ihre Ausgangssignale Ks bzw. Kd an eine erste Überlagerungsstufe 16 abgeben. Dieser werden außerdem Ausgangssignale Rs' eines ersten Offset-Speichers (MO 1) 17 zugeführt, der gespeist wird von einer Vergleichsstufe 18 mit Regel-Stellsignalen Rs.

Diese Vergleichsstufe 18 erhält ihr Eingangssignal l' von einem Flip-Flop 19, das Teil eines Blockes 20 ist, der als spezifische Stufe bezeichnet wird. Diese enthält weiterhin einen zweiten Offset-Speicher (MO 2) 21, der seine Daten, die ebenfalls dem Regel-Stellsignal Rs entsprechen, von der Vergleichsstufe 18 mittels einer die Blöcke 13 und 20 verbindenden seriellen Datenleitung erhält und ein Signal Rs" weitergibt an einen ersten Schaltanschluß eines Schalters 22. Dieser und das Flip-Flop 19 werden angesteuert durch ein elektronisches Steuergerät (ECU) 23. Der zweite Schalteingang des Schalters 22 ist verbunden mit dem Ausgang eines Korrekturspeicherchs (MK) 24, dessen Eingangssignal von der ersten Überlagerungsstufe 16 herkommt. Die Verbindung zwischen der Überlagerungsstufe 16, die Teil des Mikroprozessors 13 ist, und dem Korrekturspeicher 24, der Teil des Blockes 20 ist, ist mittels einer seriellen Datenleitung realisiert.

Der Schaltausgang des Schalters 22 führt zu einem Digital-Analog-Wandler 25, dessen Ausgangssignal weitergegeben wird an einen Verstärker 26, der Teil eines Blockes 27 ist, der hier als äußere Beschaltung der spezifischen Stufe betrachtet werden kann. Der Ausgang des Verstärkers 26 ist verbunden mit einer Ablenkspule 28, die in diesem Ausführungsbeispiel als Stellmittel dient und in Reihe mit einem Widerstand 29 geschaltet ist, der an Masse führt. Beide Anschlüsse dieses Widerstandes 29 führen zu einer Schwellwertstufe 30, die Teil der spezifischen Stufe 20 ist.

Die Funktion der Schaltung nach Figur 1 wird im Folgenden beschrieben.

In dem ersten Statikspeicher 11 und in dem ersten Dynamikspeicher 12 sind Korrekturwerte eingespeichert, die zuvor, beispielsweise im Rahmen eines Fertigungs- und Abgleichungsprozesses, ermittelt wurden und als Korrektursignale Ks bzw. Kd weitergeleitet werden. Dabei berücksichtigen die Größen Ks des Speichers 11 im wesentlichen optische und mechanische Abweichungen einer nicht dargestellten Bildröhre, die der Ablenkspule 28 zugeordnet ist. Die Korrekturwerte, die der erste Dynamikspeicher 12 enthält, berücksichtigen im wesentlichen Bildverzerrung, wie beispielsweise die sogenannte Kissenverzerrung, die für jeden Punkt eines darzustellenden Bildes unterschiedlich sein kann.

Nach Einschalten eines Fernsehgerätes, dem die in Figur 1 dargestellten Blöcke zugeordnet sind, werden zunächst die Korrekturwerte Ks, Kd der Speicher 11, 12 in die zweiten Speicher 14, 15 eingelesen und über die erste Überlagerungsstufe 16 miteinander verknüpft. Die derart verknüpften Werte werden als Stellsignal S dem Korrekturspeicher 24 zugeführt. In einem Betriebsmodus ist der Schalter 22 derart geschaltet, daß die in dem Speicher 24 enthaltenen Werte S über den Digital-Analog-Wandler 25 und den Verstärker 26 der Korrekturspule 28 zugeführt werden.

Zu Zeiten, in denen ein darzustellendes Bild nicht sichtbar ist, wie z.B. während der vertikalen Austastlücke, wird durch das elektronische Steuergerät 23 gesteuert, der Schalter 22 derart angesteuert, daß der Ausgang des zweiten Offset-Speichers 21 mit dem Eingang des Digital-Analog-Wandlers 25 verbunden ist. Zu diesen Zeiten werden somit nur die Korrekturwerte des zweiten Offset-Speichers 21 wirksam.

Durch das elektronische Steuergerät 23 wird ebenfalls das Flip-Flop 19 angesteuert, so daß Istwerte I, die über den Widerstand 29 meßbar sind, von der Schwellwertstufe 30 ausgewertet werden und das entsprechende Ausgangssignal in dem Flip-Flop 19 abgespeichert wird.

Nach dem Ende des Regelmodus und zu Beginn des nächsten Betriebsmodus wird der Schalter 22 in die in Figur 1 dargestellte Position zurückgeschaltet und das Flip-Flop 19 derart angesteuert, daß keine weiteren Ausgangssignale der Schwellwertstufe 30 abgespeichert werden.

Das Ausgangssignal I' des Flip-Flops 19, das entweder den Zustand "Null" oder den Zustand "Eins" annehmen kann, wird durch die Vergleichsstufe 18 ausgewertet. Ist in diesem Ausführungsbeispiel der Zustand dieses Ausgangssignales gleich Null, wird ein in der Stufe 18 integrierter Zähler um eins inkrementiert, ansonsten dekrementiert. Das entsprechende Ausgangssignal (Regel-Stellsignal) Rs wird sowohl an den ersten Offset-Speicher 17 als auch an den zweiten Offset-Speicher 21 übertragen. Dieses Ergebnis geht dann sowohl im Betriebsmodus als auch im Regelmodus ein.

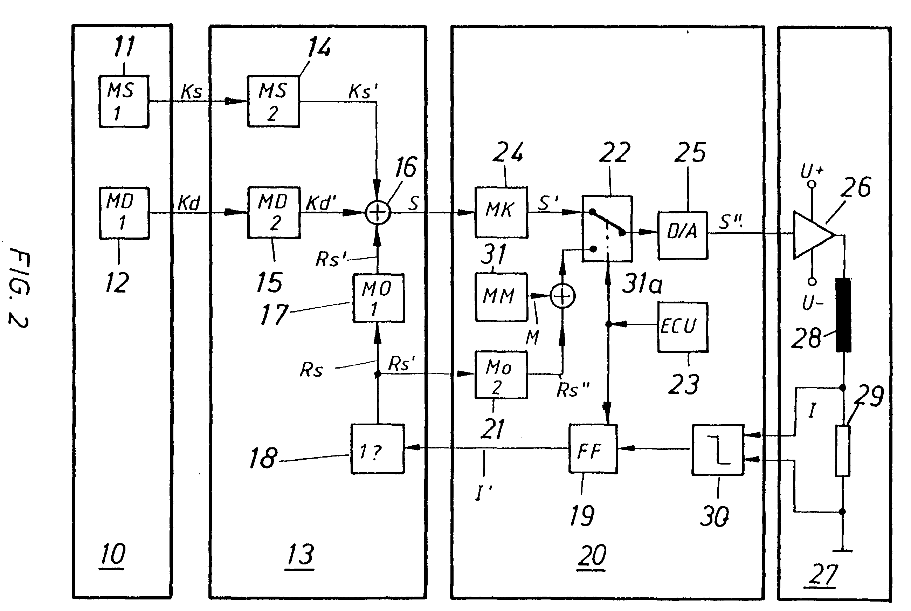

Figur 2 zeigt ein erstes Ausführungsbeispiel, bei dem der Spannungshub am Ausgang des Verstärkers 26 positive und negative Werte annehmen kann. Mittel und Signalverläufe, die die gleiche Funktion ausüben wie in der Schaltung der Figur 1 sind wie dort bezeichnet und auf sie wird nur insofern eingegangen, wie es für das Verständnis der Erfindung notwendig ist.

Der wesentliche Unterschied gegenüber der Schaltung der Figur 1 liegt darin, daß ein zusätzlicher Mittelwertspeicher (MM) 31 vorgesehen ist, in dem folgender Wert eingespeichert ist:

$$1/2 * (\text{Max (MK)} - \text{Max (MO)} );$$

Dabei bedeutet

Max'(MK)  der maximale Korrekturwert, der erfahrungsgemäß in dem Speicher 24 eingespeichert sein kann; und

Max (MO)  der maximale Korrekturwert, der erfahrungsgemäß in dem Offsetspeicher 21 eingespeichert sein kann.

Die Bestimmung eines Wertes gemäß der o.g Formel hat den Vorteil, daß zum einen in dem Speicher 21 nur positive Offsetwerte (0...Max(MO)) enthalten sind. Der neutrale Wert liegt dann bei 1/2 * Max (MO). Das ist insbesondere bei der Verwendung von Zählern zur Offsetwertbestimmung von Vorteil.

Als eine weitere Möglichkeit ist es auch möglich, in dem Speicher 31 einen Wert abzuspeichern, der

$$1/2 * \text{Max (MK)}$$

entspricht. In diesem Fall überstreicht der Wertebereich des in Speicher 21 gespeicherten Offsetwertes sowohl positive als auch negative Werte (-Max'(MO)...+Max'(MO)). Der neutrale Wert liegt dann bei Null.

Wichtig bei dem Wert des Speichers 31 ist lediglich, daß die in Speicher 21 gespeicherten Korrekturwerte in die Nähe des neutralen Punktes verschoben werden, bei dem keine Offsetkorrektur notwendig ist. Dadurch kann der in Speicher 21 vorzusehene Wertebereich vermindert werden.

Der Ausgang des Speichers 31 ist über eine zweite Überlagerungsstufe 31a mit dem ersten Schalteingang des Schalters 22 verbunden.

Dadurch wird bewirkt, daß Offsetwerte in die Speicher 17, 21 eingelesen werden, deren Wertebereich geringer ist, als bei dem vorangegangenen Ausführungsbeispiel. Damit wird der Speicherbedarf bei gleicher Auflösung für die Offsetspeicher 17, 21 vermindert.

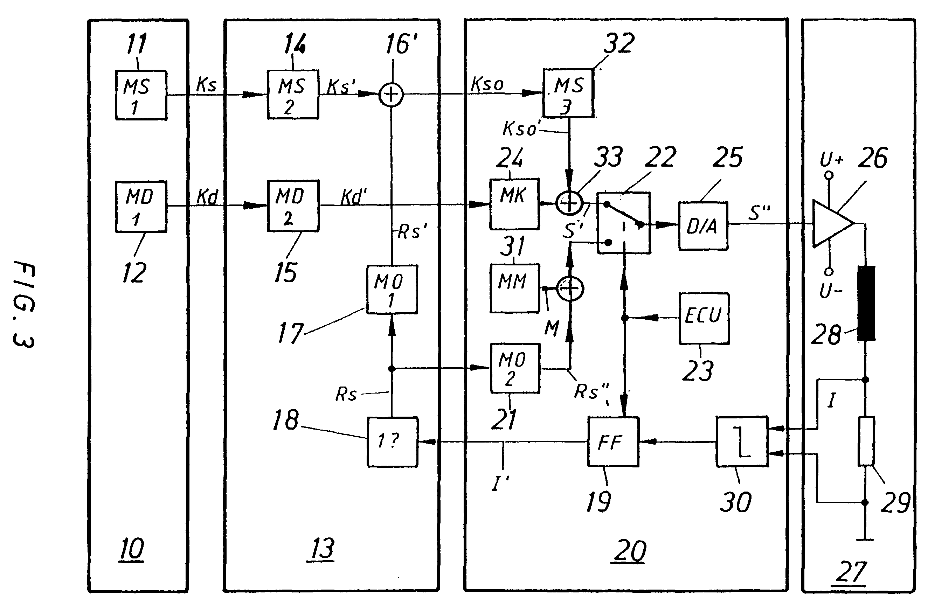

Ein zweites Beispiel ist in Figur 3 dargestellt. Auch hier soll auf schon bereits beschriebene Mittel und Signale nur in soweit eingegangen werden, wie es notwendig erscheint.

Als wesentlicher Unterschied gegenüber dem Ausführungsbeispiel der Figur 2 ist hier vorgesehen, daß der Ausgang des zweiten Dynamikspeichers 15 direkt mit dem Eingang des Korrekturspeichers 24 verbunden ist. Der Ausgang einer Überlagerungsstufe 16' ist mit einem dritten Statikspeicher (MS 3) 32 verbunden, dessen Ausgang zu einer dritten Überlagerungsstufe 33 führt. Diese ist mit einem weiteren Eingang mit dem Ausgang des Korrekturspeichers 24 verbunden und gibt ihr Ausgangssignal an den zweiten Schalteingang des Schalters 22 ab.

Die Funktion des Ausführungsbeispiels nach Figur 3 bewirkt, daß die Offset-Korrekturwerte und die statischen Korrekturwerte innerhalb des Mikroprozessors 13 miteinander verknüpft und der spezifischen Stufe 20 zugeführt werden. Die dynamischen Korrekturwerte des Speichers 15 werden dem Korrekturspeicher 24 zugeführt. Damit kann, wenn eine Drift erscheint, insgesamt ein deutlich verminderter Datenfluß erzielt werden.

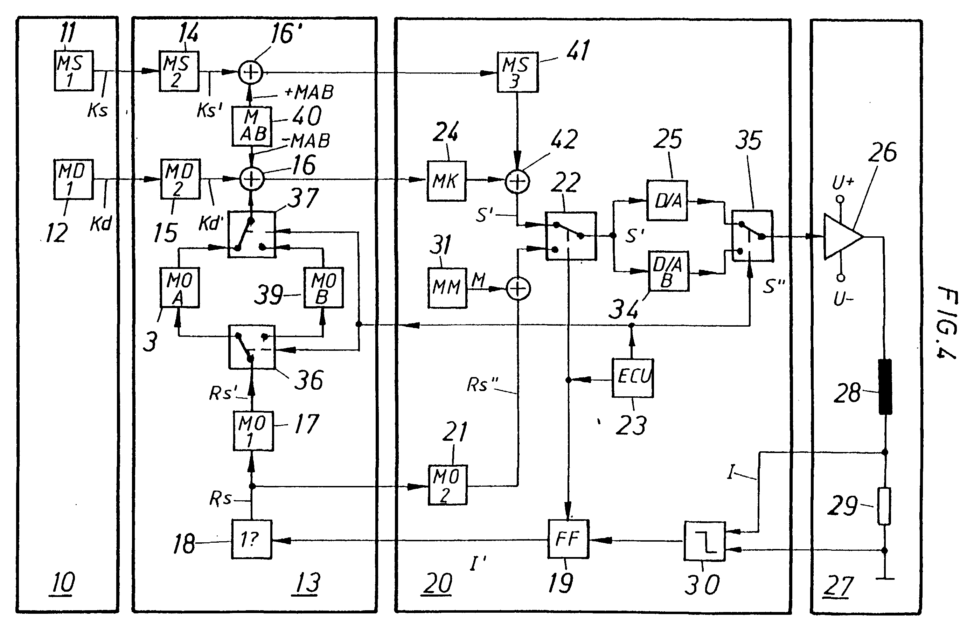

In Figur 4 ist ein weiteres Ausführungsbeispiel gezeigt, bei dem die Ablenkspule 28 angesteuert wird durch zwei unterschiedliche Ansteuerketten, die gebildet werden durch den bereits genannten Digital-Analog-Wandler 25 (Ansteuerkette A) und einen weiteren Digital-Analog-Wandler 34 (Ansteuerkette B).

Diese werden wahlweise durch einen Ketten-Umschalter 35 selektiert, der ebenfalls durch das elektronische Steuergerät 23 angesteuert wird. Mittels des gleichen Signals werden ebenfalls zwei weitere Umschalter 36, 37 angesteuert, wodurch das Abspeichern bzw. Auslesen der zu den einzelnen Ketten gehörenden Offset-Werte bewirkt wird.

Soll in dem Regelmodus die Kette A eingeregelt werden, so nehmen die Schalter 35, 36, 37 diejenige Position ein, die in Figur 4 dargestellt ist. Die dadurch ermittelten Offset-Werte werden in den zweiten Offset-Speicher 21 und in einen A-Offset-Speicher (MO A) 39a eingelesen.

Soll die Kette B des Digital-Analog-Wandlers 34 eingeregelt werden, so nehmen die Schalter 35, 36, 37 eine entgegengesetzt zu der in Figur 4 dargestellte Position ein und es werden die entsprechenden Offset-Werte in den zweiten Offset-Speicher 21 und dem B-Offset-Speicher (MO B) 39b abgespeichert. In einem AB-Speicher (M AB) 40, der zwischen der Verknüpfungsstelle 16 und der Verknüpfungsstelle 16' angeordnet ist, wird der Mittelwert der Offset-Werte der Kette A und der Kette B abgespeichert, d.h.

$$1/2 \ (Offset \ (A) + Offset \ (B)).$$

Offset (A) und Offset (B) werden bestimmt in Abhängigkeit von von dem in Speicher 31 abgespeicherten Wert, wie bereits oben beschrieben.

Dieser Mittelwert wird additiv auf die Verknüpfungsstelle 16' gegeben und subtraktiv auf die Verknüpfungsstelle 16.

Damit wird über die Datenleitung, die mit der Verknüpfungsstelle 16 verbunden ist, lediglich die dynamische Stellgröße und die Differenzwerte der einzelnen Offset-Werte A, B zu dem Mittelwert übertragen.

Von der Verknüpfungsstelle 16', werden hingegen das statische Stellsignal und der genannte Mittelwert übertragen und in einen dritten Statikspeicher (MS 3) 41, der Teil des spezifischen Bausteins 20 ist, übertragen. Die aus diesem ausgelesenen Werte und die aus dem Korrekturspeicher 24 ausgelesenen Werte werden in einer weiteren Verknüpfungsstufe 42 miteinander überlagert und bei entsprechender Stellung des Schalters 22 einer der Steuerketten A, B zugeführt.

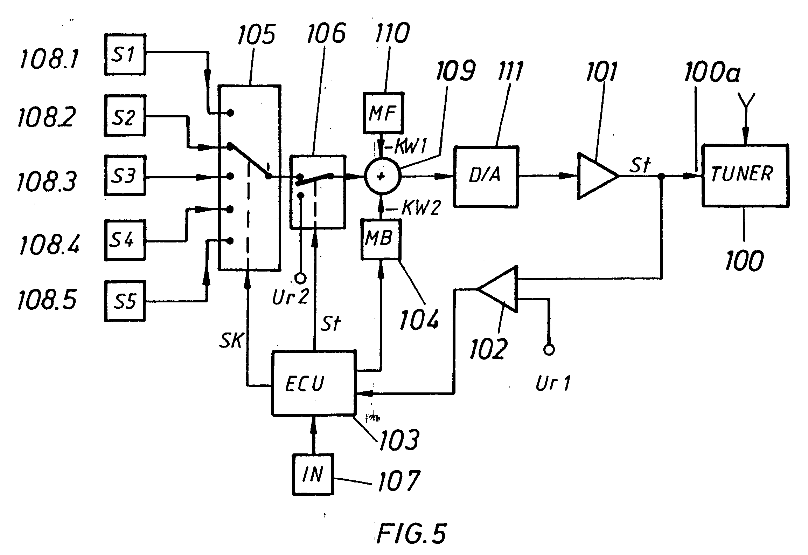

Fig. 5 zeigt eine Schaltung, bei der die Korrektur von Steuergrößen bei einem Empfänger eingesetzt wird.

Ein als Tuner 100 bezeichneter Block enthält neben den an sich bekannten Stufen eines Empfängers, beispielsweise für drahtlos oder kabelgebunden übertragene Hochfrequenz- oder optische Signale, auch Stufen zur Aufbereitung entsprechender Informationen derart, daß sie einem Benutzer oder nachgeschalteten Mitteln zur Verfügung gestellt werden können. Ein Steuereingang 100a des Tuners ist sowohl mit dem Ausgang eines Verstärkers 101 als auch mit einem ersten Eingang eines Komparators 102 verbunden. Dem Komparator 102 wird über einen zweiten Eingang ein erstes Referenzsignal Ur1 zugeführt und sein Ausgang ist mit einem Steuergerät (electronic control unit, ECU) 103 verbunden. Das Steuergerät 103 gibt Signale an einen Betriebskorrekturwerte-Speicher (MB) 104, einen Kanalschalter 105 und an einen Testmodus-Schalter 106 ab. Kanal-Schaltsignale Sk und Testmodus-Schaltsignale St werden von dem ECU 103 gebildet in Abhängigkeit von Eingabesignalen, die ein Benutzer oder nicht gezeigte Mittel über eine Eingabestufe 107 vorgeben können.

Eingänge des Kanalschalters 105 sind verbunden mit Stationsspeichern 108, in denen jeweils in digitaler Weise Werte für eine zu empfangene Frequenz abgespeichert sind. Der Ausgang des Kanalschalters 105 ist verbunden mit einem Schalteingang des Test-modus-Schalters 106, dessen zweiten Schalteingang ein zweites Referenzsignal Ur2 zugeführt wird. Der Ausgang des Schalters 106 führt zu einer Additionsstufe 109, der zusätzlich erste Korrekturwerte Kw1 aus einem Fest-Korrekturwerte-Speicher 110 und zweite Korrekturwerte Kw2 aus dem Speicher 104 zugeführt werden.

Der Ausgang der Additionsstufe 109 ist verbunden mit einem Digital/Analog- (D/A-) Wandler 111, dessen Ausgangssignal dem Eingang des Verstärkers 101 zugeführt wird.

Im folgenden wird die Funktion der Schaltung der Fig. 5 erläutert. Bei einem Abgleich im Rahmen eines Fertigungsprozesses werden für verwendete Bauelemente und Baugruppen, wie beispielsweise von dem D/A-Wandler 111 und dem Verstärker 101, Abweichungen von vorgegebenen Betriebsgrößen, wie Verstärkungsfaktor und dergleichen, bestimmt und es werden entsprechende Korrekturgrößen ermittelt, die in dem Speicher 110 abgespeichert werden. Die Bestimmung der Abweichungen von vorgegebenen Betriebsgrößen kann beispielsweise durch Messungen der entsprechenden Baugruppen unabhängig von der Beschaltung des Tuners 100 vorgenommen werden. Eine andere Möglichkeit ist, an den Ausgang des Schalters 106 vorgegebene Justiersignale anzulegen und das Verhalten des Tuners zu beobachten. Durch Einspeichern von Korrekturwerten in den Speicher 110 kann eine gewünschte Reaktion des Tuners 100 in Abhängigkeit dieser Justiersignale erfolgen. Dieser Prozeß wird bevorzugterweise durch ein Regelverfahren realisiert.

Da zusätzlich zu den im wesentlichen konstanten Abweichungen der Bauelemente noch solche hinzukommen, die sich im Laufe des Betriebs ändern können, beispielsweise durch Alterungs- oder thermische Prozesse, wird das Steuersignal St zusätzlich in vorgegebenen Zeiträumen mittels des Komparators 102 und des ECU 103 korrigiert. Das erfolgt, indem anstelle der Ausgangssignale der Stationsspeicher 108 das zweite Referenzsignal Ur2 der Additionsstufe 109 zugeführt und der entsprechende Wert des Steuersignales St mit dem ersten Referenzsignal Ur1 verglichen wird.

Diese Zeiträume werden durch das ECU 103 derart gewählt, daß eine Beeinflussung des Benutzers oder nachgeschalteter Mittel, denen das Ausgangssignal des Tuners 100 zugeführt wird, nahezu vernachlässigbar ist. Als besonders geeignet hat sich erwiesen, die Umschaltung von den Stationsspeichern 108 auf das zweite Referenzsignal Ur2 dann durchzuführen, wenn eine Umschaltung von einem Kanal, das heißt von einem der Stationsspeicher 108 zu einem anderen, erfolgen soll. Das heißt, wird über die Eingangsstufe veranlaßt, auf einen anderen Kanal umzuschalten, so wird zunächst auf das Signal Ur2 geschaltet und es werden die in Speicher 104 abgespeicherten Korrekturwerte gegebenenfalls korrigiert. Erst anschließend erfolgt die Umschaltung auf den gewünschten Stationsspeicher.

Denkbar ist auch, daß zunächst der Schalter 105 und erst dann der Schalter 106 angesteuert wird.

Auch eine gleichzeitige Ansteuerung dieser beiden Schalter 105, 106 ist denkbar, um den Umschaltvorgang bei durchzuführender Korrektur der Korrekturwerte zu beschleunigen.

## Patentansprüche

1. Verfahren zur Bildkorrektur, das zwei unterschiedliche, zeitlich nacheinander ablaufende Phasen aufweist,

    wobei die erste Phase eine Regelphase ist, die folgende Schritte umfaßt:

    während der vertikalen Austastlücke wird durch eine elektrische Messung ein Istwert (I) bestimmt, der ein Maß für den in einem Stellmittel (28) fließenden elektrischen Strom ist, sodann wird aus einem Vergleich des Istwertes (I) mit einem vorgegebenen Sollwert ein Regel-Stellsignal (Rs) ermittelt, und anschließend wird aus einer Überlagerung des Regel-Stellsignals (Rs) mit vorbestimmten abgespeicherten Korrektursignalen (Ks, Kd) ein Stellsignal (S) erzeugt,

    wobei die zweite Phase eine Betriebsphase ist, während der das Stellsignal (S) oder ein davon abgeleitetes Signal (S") dem Stellmittel (28) zugeführt wird,

    wobei von den vorbestimmten Korrektursignalen eine erste Gruppe (Ks) statische und eine zweite Gruppe (Kd) dynamische Korrekturen bewirken, und wobei in der Betriebsphase das Regel-Stellsignal (Rs) zunächst den für die statischen Korrekturen bestimmten Korrektursignalen (Ks) überlagert wird, wodurch ein statisches Offsetsignal (Kso) erzielt wird, und

    wobei das statische Offsetsignal (Kso) anschließend den für die dynamischen Korrekturen bestimmten Korrektursignalen (Kd) überlagert wird, wodurch das Stellsignal (S) gewonnen wird.

2. Verfahren nach Anspruch 1, **dadurch gekennzeichnet, daß** dem Regel-Stellsignal (Rs) oder einem davon abgeleiteten Signal (Rs") weitere Signale (M) überlagert werden, so daß der Wertebereich des Regel-Stellsignales (Rs) vermindert wird.

3. Verfahren nach Anspruch 1 oder 2, **dadurch gekennzeichnet, daß** dem Stellmittel mehr als eine Ansteuerkette zugeordnet ist und daß für jede dieser Ansteuerketten Stellsignale bestimmt werden.

4. Verfahren nach Anspruch 3, **dadurch gekennzeichnet, daß** folgende Signale gebildet werden:

    - ein Mittelwertsignal (MAB) aus den Regel-Stellsignalen für die Ansteuerketten,

- Differenzsignale aus den Regel-Stellsignalen und dem Mittelwertsignal (MAB),

daß das Mittelwertsignal (MAB) der statischen Stellgröße überlagert wird und

daß die Differenzsignale dem dynamischen Stellsignal überlagert werden.

5. Vorrichtung zur Bildkorrektur

mit einem Umschaltmittel (22, 23), mittels dessen die Vorrichtung zwischen einem Regelmodus und einem Betriebsmodus umschaltbar ist,

mit einer Steuerkette, mittels der in dem Betriebsmodus in ersten Speichermitteln (11, 12) abgespeicherte vorbestimmte Korrektursignale elektrischen Schaltungselementen (22, 24, 25, 26) als Eingangssignale zuführbar sind, die einen dem jeweiligen Eingangssignal entsprechenden Strom an eine Spule (28) als Stellglied abgeben,

mit Meßmitteln (29), die einen Istwert erfassen,

mit Vergleichsmitteln (18, 19, 30), die den gemessenen Istwert mit einem Sollwert vergleichen und ein Regelstellsignal (Rs) erzeugen,

mit einem Speicher (17), in welchem das Regelstellsignal (Rs) während des Regelmodus abspeicherbar ist und aus welchem das Regelstellsignal (Rs) während des Betriebsmodus auslesbar und der Steuerkette zuführbar ist,

wobei das Umschaltmittel (22, 23) in der Schaltung derart angeordnet ist, daß während des Regelmodus die in den ersten Speichermitteln (11, 12) abgespeicherten Korrekturwerte das Stellglied (28) nicht beeinflussen, und

wobei zwischen dem Stellglied und dem Meßmittel (29) eine Regelstrecke als elektrisch leitende Verbindung ausgebildet ist, **dadurch gekennzeichnet,**

**daß** ein dritter Speicher (31) vorgesehen ist, in welchem weitere Signale abgespeichert sind, die dem Regel-Stellsignal (Rs) oder einem davon abgeleiteten Signal (Rs") überlagert werden.

6. Vorrichtung nach Anspruch 5, **dadurch gekennzeichnet, daß** dem Stellmittel (28) mehr als eine Ansteuerkette (A, B) zugeordnet ist, und daß die Steuermittel (23) bewirken, daß für jede dieser Ansteuerketten (A, B) Stellsignale bestimmt werden.

7. Vorrichtung nach Anspruch 6, **dadurch gekennzeichnet, daß** eine Mittelwertstufe (40) vorgesehen ist, die einen Mittelwert (MAB) aus den Regel-Stellsignalen der Ansteuerketten bildet sowie Differenzsignale aus den Regel-Stellsignalen und aus dem Mittelwertsignal (MAB) bildet,

daß eine erste Überlagerungsstufe (16) vorgesehen ist, die das Mittelwertsignal (MAB) der statischen Stellgröße überlagert, und

daß eine zweite Überlagerungsstufe (16') vorgesehen ist, welche die Differenzsignale dem dynamischen Stellsignal überlagert.

8. Fernsehgerät **dadurch gekennzeichnet, daß** es eine Vorrichtung nach einem der Ansprüche 5 bis 7 aufweist.

**Claims**

1. Method for correcting a picture including two different modes running time-sequentially, wherein the first mode is a regulating mode including the following steps:

during the vertical blanking period an actual value (I) is defined by an electric measurement, said actual value being a dimension figure for an electric current flowing within a means of adjustment (28), then a regulating actuating signal (Rs) is derived by comparing said actual value (I) with a given desired value, and then an actuating signal (S) is produced by superimposing said regulating actuating signal (Rs) upon predetermined and stored correction signals (Ks, Kd),

wherein the second mode is an operating mode during which said actuating signal (S) or a signal (S") derived therefrom is fed to said means of adjustment (28), wherein a first group (Ks) of the predetermined correction signals effect static, and a second group (Kd) effect dynamic corrections, and wherein in the operating mode, the regulating actuating signal (Rs) is firstly superimposed upon the correction signals (Ks) provided for the static corrections, whereby a static offset signal (Kso) is achieved, and wherein the static offset signal (Kso) is subsequently superimposed upon the correction signals (Kd) provided for the dynamic corrections, whereby the actuating signal (S) is obtained.

2. Method according to claim 1, **characterized in that** further signals (M) are superimposed upon the regulating signal (Rs) or a signal (R") derived therefrom so that the range of values of the regulating actuating signal (Rs) is reduced.

3. Method according to claim 1 or 2, **characterized in that** more than one controlling means is allocated to the means of adjustment, and that actuating signals are determined for each of the controlling means.

**4.** Method according to claim 3, **characterized in that** the following signals are formed:

- an average value signal (MAB) from the regulating actuating signals for the controlling means,
- difference signals from the regulating actuating signals and the average value signal (MAB), that the average value signal (MAB) is superimposed upon the static variable, and that the difference signals are superimposed upon the dynamic actuating signal.

**5.** Device for correcting a picture including

a switching means (22, 23) by means of which the device can be switched between a regulating mode and an operating mode,
a controlling means by means of which predetermined correction signals being stored within first memory means (11, 12) during the operating mode can be fed to electric circuit elements (22, 24, 25, 26) as input signals, the electric circuit elements outputting a current corresponding to the actual input signal to a coil (28), measuring means (29) detecting an actual value,
comparison means (18, 19, 30) comparing the measured actual value with a desired value and generating a regulating actuating signal (Rs),
a memory (17), in which the regulating actuating signal (Rs) can be stored during the regulating mode, and from which the regulating actuating signal (Rs) can be read during the operating mode and can be fed to the controlling means,

wherein the switching means (22, 23) is arranged in the circuit in such a way that the correction values stored in the first memory means (11, 12) do not affect the means of adjustment (28) during the regulating mode, and
wherein between the means of adjustment and the measuring means (29) a regulating path is formed as an electrical conducting connection, **characterized in that**
a third memory (31) is provided in which further signals are stored which are superimposed upon the regulating actuating signal (Rs) or a signal (Rs") derived therefrom

**6.** Device according claim 5, **characterized in that** more than one controlling means (A, B) is allocated to the means of adjustment (28), and that the means of control (23) have the effect that actuating signals are determined for each of the controlling means (A, B).

**7.** Device according to claim 6, **characterized in that**

an average value stage (40) is provided, which forms an average value (MAB) from the regulating actuating signals of the controlling means as well as difference signals from the regulating actuating signals and the average value signal (MAB),
a first superimposing stage (16) is provided, which superimposes the average value signal (MAB) upon the static variable, and
a second superimposing stage (16') is provided, which superimposes the difference signals upon the dynamic actuating signal.

**8.** Television set, **characterized in that** it includes a device according to one of claims 5 to 7.

**Revendications**

**1.** Méthode de correction d'image présentant deux phases distinctes, consécutives dans le temps, où la première phase est une phase de réglage, qui comprend les étapes suivantes :

pendant l'intervalle de suppression vertical, une valeur réelle (I) est déterminée, représentant une mesure pour le courant électrique passant dans un module de réglage (28),
par suite, par une comparaison entre la valeur réelle (I) et une valeur de consigne donnée, un signal régulateur (Rs) est détecté, et ensuite par une superposition du signal régulateur (Rs) avec des signaux de correction prédéfinis mémorisés (Ks, Kd), un signal de réglage (S) est produit,
où la deuxième phase est une phase de fonctionnement pendant laquelle le signal de réglage (S) ou un signal dérivé (S") est mené au module de réglage (28),

où parmi les signaux de correction définis auparavant, un premier groupe (Ks) produit des corrections statiques et un second groupe (Kd) des corrections dynamiques, et
où dans la phase de fonctionnement, le signal régulateur (Rs) est d'abord superposé aux signaux de correction définis pour les corrections statiques (Ks), ce par quoi un signal de décalage statique (Kso) est obtenu, et
où le signal de décalage statique (Kso) est ensuite superposé aux signaux de correction définis pour les corrections dynamiques (Kd), ce par quoi on obtient le signal de réglage (S).

**2.** Méthode selon la revendication 1, **caractérisée en ce que** d'autres signaux (M) sont superposés au signal régulateur (Rs) ou à un signal dérivé (Rs''), de sorte que la plage de valeurs du signal régulateur (Rs) soit réduite.

**3.** Méthode selon la revendication 1 ou 2, **caractérisée en ce que** plus d'une chaîne de commande est affectée au module de réglage et pour chacune de ces chaînes de commande des signaux de réglage sont déterminés.

**4.** Méthode selon la revendication 3, **caractérisée en ce que** les signaux suivants sont formés :

- un signal de valeur moyenne (MAB) à partir des signaux régulateurs pour les chaînes de commande,
- des signaux différentiels à partir des signaux régulateurs et du signal de valeur moyenne (MAB),

**que** le signal de valeur moyenne (MAB) est superposé à la variable réglante statique et
**que** les signaux différentiels sont superposés au signal de réglage dynamique.

**5.** Dispositif de correction

avec un module de commutation (22, 23), au moyen duquel le dispositif est commutable soit sur un mode réglage, soit sur un mode fonctionnement,
avec une chaîne de commande, au moyen de laquelle dans le mode fonctionnement, des signaux de correction prédéfinis mémorisés dans des premiers modules mémoire (11, 12) peuvent être amenés à des éléments de circuit électriques (22, 24, 25, 26) en tant que signaux d'entrée, qui délivrent un courant correspondant à chaque signal d'entrée à une bobine (28) en tant que composant de réglage,
avec un module de mesure (29), qui détecte une valeur réelle,
avec des modules de comparaison (18, 19, 30) qui comparent la valeur réelle mesurée avec une valeur de consigne et produisent un signal régulateur (Rs),
et avec une mémoire (17), dans laquelle le signal régulateur (Rs) peut être enregistré pendant le mode réglage et de laquelle le signal régulateur (Rs) est extractible pendant le mode fonctionnement et peut être amené à la chaîne de commande, où le module de commutation (22, 23) est monté de telle sorte dans le circuit, que pendant le mode réglage, les valeurs de correction mémorisées dans les premiers modules mémoire (11, 12), n'influencent pas le composant de réglage (28), et où entre le composant de réglage et le module de mesure (29) un système réglé est formé comme une liaison conductrice électrique **caractérisé en ce que** une troisième mémoire (31) est prévue, dans laquelle d'autres signaux sont enregistrés, signaux qui sont superposés au signal régulateur (Rs) ou à un signal dérivé (Rs'').

**6.** Dispositif selon la revendication 5, **caractérisé en ce que** plus d'une chaîne de commande (A, B) est affectée au module de réglage (28) et que les modules de commande (23) ont pour effet que pour chacune de ces chaînes de commande (A, B) des signaux de réglage sont déterminés.

**7.** Dispositif selon la revendication 6, **caractérisé en ce que**

- un étage de valeur moyenne (40) est prévu, qui forme une valeur moyenne (MAB) à partir des signaux régulateurs des chaînes de commande et forme des signaux différentiels à partir des signaux régulateurs et du signal de valeur moyenne (MAB),
- un premier étage de superposition (16) est prévu, qui superpose le signal de valeur moyenne (MAB) à la variable réglante statique,
- un second étage de superposition (16') est prévu, qui superpose les signaux différentiels au signal de réglage dynamique.

**8.** Téléviseur **caractérisé en ce qu'**il présente un dispositif selon une des revendications 5 à 7.

FIG.1

EP 0 568 982 B2

10

*11*

MS 1

*12*

MD 1

Ks

Kd

*10*

*14*

MS 2

MD 2

*15*

MO 1

*17*

Rs

*18*

1?

Ks'

Kd'

Rs'

Rs'

*16*

S

*13*

*24*

MK

*21*

MO 2

Rs"

S'

*22*

ECU

*23*

FF

*19*

I'

*25*

D/A

*30*

S"

*20*

U+

*26*

U−

*28*

*29*

I

*27*

FIG. 2

FIG. 3

EP 0 568 982 B2

11

MS 1

12

Ks

MD 1

Kd

14

MS 2

Ks'

16'

Kso

32

MS 3

Kso'

24

MK

33

S'

22

25

D/A

S''

U+ 26

15

MD 2

Kd'

31

MM

M

ECU

23

U− 28

Rs'

17

MO 1

18

1?

Rs

MO 2

Rs''

21

I'

FF

19

30

I

29

27

20

13

10

12

# FIG.4

FIG.5

EP 0 568 982 B2